Europäisches Patentamt

European Patent Office

Office européen des brevets

(19)

(11) Veröffentlichungsnummer : **0 087 096**
**B1**

(12) # EUROPÄISCHE PATENTSCHRIFT

(45) Veröffentlichungstag der Patentschrift :
06.05.87

(21) Anmeldenummer : 83101386.7

(22) Anmeldetag : 14.02.83

(51) Int. Cl.⁴ : **G 11 B 21/16**, G 11 B  5/48

(54) **Kopfarm-Lagervorrichtung für mindestens einen Abtastkopf in Aufzeichnungs- und Wiedergabegeräten für schiebenförmige Aufzeichnungsträger.**

(30) Priorität : 19.02.82 DE 3205947
11.10.82 DE 8228522 U

(43) Veröffentlichungstag der Anmeldung :
31.08.83 Patentblatt 83/35

(45) Bekanntmachung des Hinweises auf die Patenterteilung : 06.05.87 Patentblatt 87/19

(84) Benannte Vertragsstaaten :
**AT CH DE FR GB IT LI NL SE**

(56) Entgegenhaltungen :
**EP-A- 0 044 151**
**GB-A- 2 000 354**
**US-A- 3 018 152**
**US-A- 3 156 786**
**US-A- 3 482 060**
**US-A- 4 158 212**
**PATENTS ABSTRACTS OF JAPAN, Band 4, Nr. 118(P-24)(600), 22. August 1980, Seite 74P24**

(73) Patentinhaber : **BASF Aktiengesellschaft**
**Carl-Bosch-Strasse 38**
**D-6700 Ludwigshafen (DE)**

(72) Erfinder : **Boehm, Udo**
**Am Weidenschlag 6**
**D-6700 Ludwigshafen (DE)**
Erfinder : **Grittmann, Ernst-Juergen**
**Werderstrasse 35 a**
**D-6700 Ludwigshafen (DE)**
Erfinder : **Schulze-Berge, Klaus**
**Stuhlbruderhofstrasse 13**
**D-6704 Mutterstadt (DE)**

EP 0 087 096 B1

## Beschreibung

Die Erfindung betrifft eine Kopfarm-Lagervorrichtung für mindestens einen Abtastkopf in Aufzeichnungs- und/oder Wiedergabegeräten für Aufzeichnungsträger, insbesondere flexible Aufzeichnungsträger, wobei der Kopfarm mit dem Abtastkopf auf einer zwischen den U-Schenkeln der Lagervorrichtung vorgesehenen Gelenkachse gelagert ist und über eine Andruckfeder an den Aufzeichnungsträger gegen eine weitere Abtastkopfvorrichtung federnd andrückbar ist.

Aufzeichnungsträger im Sinne der Erfindung sind Magnetbänder, -filme und jede Art von Informationsträgerkarten und -scheiben für Analog- oder Digitalsignalaufzeichnung und/oder -wiedergabe.

Es ist an Geräten für flexible Magnetplatten bekannt, eine in Querrichtung knickbare Feder z. B. eine Blattfeder einerseits am Kopfträgerarm und andererseits an der Kopfschlittenvorrichtung vorzusehen, wodurch der Kopfträgerarm sowohl eine Gelenkfunktion als auch eine Andruckfunktion erhält, s. z. B. GB-B-2 000 354. Eine solche Kopfträger-Lagervorrichtung ist hinsichtlich einer definierten wiederholbaren Funktion und einer wirtschaftlichen Herstellung nachteilig. Wenn auch der bekannte Kopfträgerarm durch eine spezielle Andruckfeder zusätzlich an den Aufzeichnungsträger angedrückt wird, so ergibt sich doch eine unpräzise Kopfarmlagerung mit nicht fester Federkennlinie und ungünstigem Kennlinienverlauf, die auch temperaturabhängig ist.

Es ist aus der US-A-3 482 060 eine Lagervorrichtung der eingangs definierten Art bekannt, wobei eine Gelenkachse mittels Kugellagern, Lagerkonen und Lagertassen für einen Schwenkarm gelagert ist, um bei der Montage eine spielfreie Ausbildung zu erreichen. Die Vorrichtung ist sehr aufwendig herstellbar, deshalb nicht für eine Serienfertigung geeignet, und nicht geeignet, ein nach der Montage auftretendes temperaturbedingtes Lagerspiel aufzufangen. Außerdem ist eine definierte Lagerreibungscharakteristik nicht einstellbar, und es ergibt sich eine normale progressive Federkennlinie als Kopfandruckscharakteristik.

Aus der EP-A-44 151 ist eine Schwenkarmlagervorrichtung bekannt, bei der die Achse nur im Idealfall in Bohrungen von U-Schenkeln ideal gelagert ist, nämlich, wenn die Schenkel exakt senkrecht stehen und somit Kreisringberührung auftritt. Durch mechanischen Verschleiß, Temperatureinflüsse etc. wird die Kontaktzone jedoch in der Praxis zur Ellipsenringberührung, wodurch sich die Andruckkraft der Schenkel an die Schwenkachse zwangsläufig ändert. Die bekannte Lagervorrichtung ist außerdem mittels zusätzlicher Blattfedern nachgiebig auf dem Gerätechassis gelagert und somit nur für ein Doppelkopfgerät einsetzbar. Eine Anpassung dieser bekannten Vorrichtung für ein Einkopfgerät würde zwangsläufig ebenfalls eine progressive Federkennlinie ergeben mit starker Schwingneigung des Positionierers. Der Hinweis in der EP-A-44 151 auf eine nachgiebige Ausbildung der U-Schenkel zur spielfreien Montage macht die Lagervorrichtung weder für die Serienfertigung geeignet, noch bewirkt sie in irgendeiner Weise eine Temperaturkompensation.

Bei Verwendung von Kopfarmdruckfedern mit progressiver Federkennlinie ist es äußerst schwierig, die Lade-Andruckfeder und den Lade-Betätigungsmechanismus so zu dimensionieren, daß ein einwandfreies Einlegen/Entnehmen der flexiblen Platte ohne Kopfbeschädigungen gewährleistet ist, wobei letzteres sowohl durch Kopfabreißen beim Einführen als auch durch Anschlagen eines oder beider Köpfe beim Auseinanderbewegen zum Entnehmen der flexiblen Platte auftreten kann.

Aus der US-A-4 158 212 und dem Patent Abstracts of Japan, Band 4, Nr. 118 (P-24) (600) v. 22.08.1980, Seite 74, p. 24 und der JP-A-5 573 924 sind Feder-Einstellvorrichtungen, insbesondere für Schenkelfedern, für Magnetkopfpositionierer bekannt, jedoch nicht in Verbindung mit einer Magnetkopf-Lagervorrichtung gemäß vorliegender Erfindung.

Aus der o. g. GB-B-2 000 354 ist es an Geräten für flexible Magnetplatten bekannt, eine Schenkelfeder einerseits am Kopfträgerarm und andererseits an der Kopfschlittenvorrichtung vorzusehen, wodurch der Kopfträgerarm mit dem Kopf an den Aufzeichnungsträger angedrückt wird. Eine solche Kopfträger-Andruckfeder ist hinsichtlich einer definierten Andruckkraft bei wirtschaftlicher Herstellung nachteilig, da durch die Serienherstellung bedingt die Federkräfte einer erheblichen Streuung unterliegen (ca. 30 % Abweichung vom Sollwert). Der Kopfträgerarm soll durch die Andruckfeder mit vorgegebener Andruckkraft an den Aufzeichnungsträger angedrückt werden, da sich sonst eine unpräzise Kopf-Aufzeichnungsträger-Zuordnung ergibt, die für die Aufzeichnungs-/Wiedergabevorgänge nicht tolerierbar ist.

Die vorliegende Erfindung hat sich die Aufgabe gestellt, eine Kopfarm-Lagervorrichtung der eingangs beschriebenen Art für eine Serienfertigung und mit einer zuverlässigen technischen Funktion, besonders im Falle von Temperaturänderungen, bereitzustellen.

Die Aufgabe wird gelöst mit einer Kopfarm-Lagervorrichtung für mindestens einen Abtastkopf in Aufzeichnungs- und/oder Wiedergabegeräten für Aufzeichnungsträger, insbesondere für flexible Aufzeichnungsträger, wie eingangs definiert, wenn die Gelenkachse mittels Spitzen- oder Kugelformenden an den U-Schenkeln reibungsarm gelagert ist und zur spielfreien Lagerung eine auf die U-Schenkel wirkende und auf die Enden der Gelenkachse eine Axialdruckkraft von zwischen 5,1 und 20,4 Newton ausübende Feder vorgesehen ist, und daß die Andruckfeder eine im wesentlichen horizontal verlaufende Federkennlinie aufweist.

Es ist damit möglich, Aufzeichnungsträger mit unterschiedlicher Dicke in einem Gerät zu verwenden. Besonders vorteilhaft ist auch die Verwendung in Geräten, in denen eine federbelastete Kopfladevorrichtung vorgesehen ist, bei der das Ineingriffkommen und das Außereingriffkommen des oder der Köpfe mit den bzw. von dem Aufzeichnungsträger von der Lade-Andruckfeder bestimmt wird. Bei Verwendung von Kopfarmandruckfedern mit proportional ansteigender Andruckkraft bei Vergrößerung der Auslenkung ist es äußerst schwierig, die Lade-Andruckfeder und den Lade-Betätigungsmechanismus so zu dimensionieren, daß ein einwandfreies Einlegen/Entnehmen der flexiblen Platte ohne Kopfbeschädigungen gewährleistet ist, wobei letzteres sowohl durch Kopfabreißen beim Einführen als auch durch Anschlagen eines oder beider Köpfe beim Auseinanderbewegen zum Entnehmen der flexiblen Platte auftreten kann.

Es ist ferner vorteilhaft, ein Schwingen des Kopfes, das infolge des Ladevorgangs der Köpfe, aber auch unabhängig davon, bei Verwendung einer « Gelenkfeder » gemäß Stand der Technik auftreten kann, gemäß vorliegender Erfindung zu vermeiden.

In weiterer Erfindungsausbildung können die U-Schenkel mit einer Zugfeder einstückig ausgebildet sein.

Damit ergibt sich eine wirtschaftliche Herstellungsweise, die den Zusammenbauaufwand noch zusätzlich herabgesetzt. Außerdem wird eine feste Zuordnung von Feder und U-Schenkeln erreicht, wodurch die Federkräfte unverändert und konstant bleiben.

In weiterer Ausbildung kann die einstückig ausgebildete Zugfeder eine Mäanderform aufweisen.

Sehr zweckmäßig wird die Kennlinie der Andruckfeder so eingestellt, daß sie vom horizontalen Verlauf um ca. ± 10 Prozent abweicht. Damit ist ein praktischer Dimensionierungsbereich gegeben.

Ferner ist es vorteilhaft für FlexyDisk-Laufwerke, wenn die zwischen Gelenkachse und U-Schenkeln wirkende Axialdruckkraft etwa 7,8 Newton beträgt.

Weitere Ausgestaltungen der Erfindung betreffen Einstellvorrichtungen für die Andruckfeder in Verbindung mit der erfindungsgemäßen Kopfarm-Lagervorrichtung, wenn die Andruckfeder eine Schenkelfeder ist.

Praktische Ausgestaltungen dieser Einstellvorrichtung beziehen sich auf die Verwendung einer drehbar gelagerten Stufenscheibe mit mehreren Stufen, eines stufenlosen Wendels auf einer Drehscheibe, eines höheneinstellbaren Gewindestifts und/oder eines längsverschieblichen Keilkörpers. In der Praxis sind alle Vorrichtungen aus Kunststoff im Spritzguß herstellbar und damit besonders kostengünstig.

Damit wird eine sehr wirtschaftliche und einfach zu montierende Lagervorrichtung bereitgestellt.

Einzelheiten der Erfindung sind nachfolgend beschrieben, anhand von in der Zeichnung dargestellten Ausführungsbeispielen. Darin zeigen

Figur 1 eine schematische Darstellung der Kopfvorrichtung eines Speicherlaufwerks für flexible Datenplatten (Draufsicht),

Figur 2 das Laufwerk aus Figur 1 in Seitenansicht, teilweise im Schnitt,

Figur 3 eine Magnetkopf-Schlittenvorrichtung mit Kopfarm-Lagervorrichtung gemäß der Erfindung,

Figur 4 eine Lagervorrichtung mit Gelenkachse und separater Druckfeder,

Figur 5 eine weitere Lagervorrichtung mit Gelenkachse und separater Zugfeder,

Figur 6 eine weitere Lagervorrichtung mit hohler Gelenkachse und darin befindlicher Druckfeder,

Figur 7 eine erfindungsgemäß einstückige Lagervorrichtung mit integrierter Feder,

Figur 7A die Lagervorrichtung aus Figur 7 ohne Gelenkachse im Aufriß,

Figur 7B die Lagervorrichtung aus Figur 7 mit Gelenkachse,

Figur 8 eine Federkennlinie der Lagervorrichtung gemäß Figur 7 in Verbindung mit einer Andruckfeder gemäß Figur 3,

Figur 9 eine Magnetkopf-Schlittenvorrichtung mit Kopfarm-Lagervorrichtung gemäß der Erfindung,

Figur 10 eine Ansicht der Schenkelfeder mit Stufenscheibe in vergrößertem Maßstab,

Figur 11a bis 11d und 11a' bis 11d' schematische praktische Ausführungen von Einstellvorrichtung.

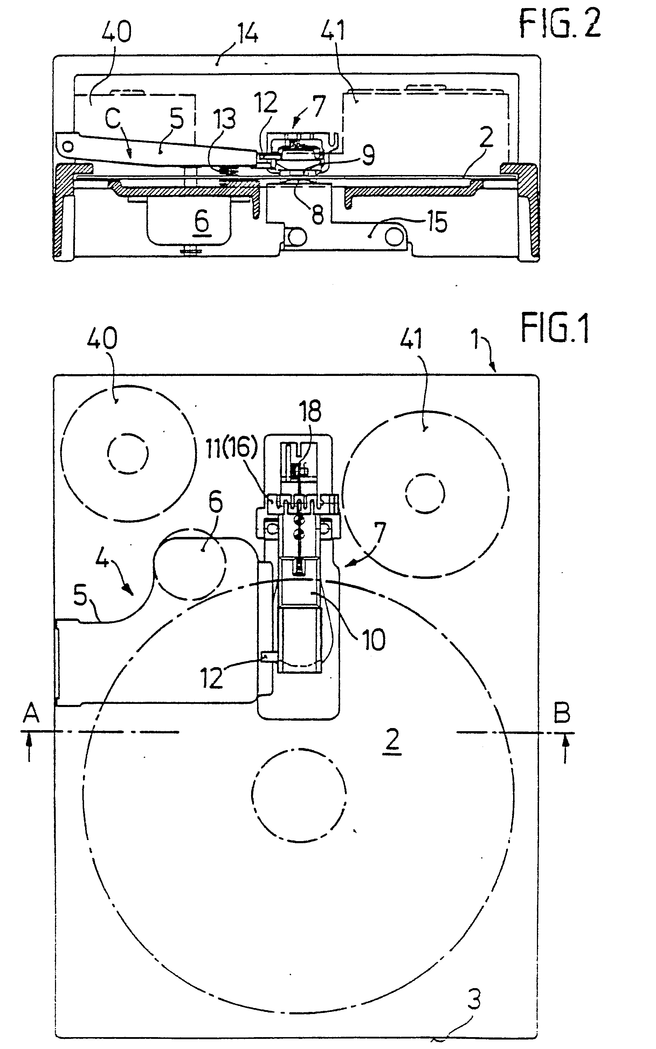

Figur 1 zeigt eine Magnetspeichereinrichtung 1 für FlexyDisks[R] (eingetragenes Warenzeichen der BASF Aktiengesellschaft, Ludwigshafen), eine FlexyDisk oder Magnetplatte 2 ist bereits durch die Einführklappe 3 eingeführt. In dieser Lage der Platte 2 wird sie z. B. durch einen nicht dargestellten Klemmechanismus eingespannt und in Drehung versetzt. Nach Erreichen der Solldrehzahl wird der Kopflademechanismus 4 eingeschaltet, der aus der Kopfladeklappe 5, einer Betätigungsvorrichtung 6 und der eigentlichen Magnetkopfvorrichtung 7, hier mit stationärem Kopf 8 und beweglichem Kopf 9 am Kopfarm 10, wobei der Kopfarm in einer Lagervorrichtung 11 schwenkbar gelagert ist, besteht.

Die Ladeklappe 5 bewegt sich daraufhin in Richtung des Pfeils C nach unten und gibt dabei über den Fortsatz 12 den Kopfarm 10 frei, dadurch, daß durch die Feder 13 der Kopfarm 10 entgegen der nach unten gerichteten Andruckkraft der Schenkelfeder 18 nach oben gedrückt wird. Der Kopf 9 kommt an der Platte 2, die einfachheitshalber ohne Hülle dargestellt ist, in Anlage. Kopf 9 drückt mit der Kraft der Feder 18 auf die Platte 2, und etwa demgegenüber ist der stationäre Kopf 8, der natürlich auch federnd beweglich sein kann, in Anlage an der Plattenunterseite. Die Feder 13 gehört zum Betätigungsmechanismus 6, dadurch wird die Ladeklappe 5 in Offenstellung vorspannt. Figur 2 zeigt den Lademechanismus 4 in Ladestellung (Köpfe in Betriebslage an der Platte 2).

Aus dieser Stellung bringt die Ladeklappe 5 unter Wirkung der Feder 13 den Kopf 9 außer Eingriff (entgegen Pfeil C) von der Platte 2, wenn die Einführklappe 3 des Geräts geöffnet wird. Aus Figur 2 geht hervor, daß durch die Auslegung und Anordnung der Betätigungsvorrichtung 6 und der Feder 13 zumindest während des Ladevorgangs eine Bewegung der Köpfe 9 und 8 aufeinander zu erfolgt. Die Vorspannung und damit das Zusammenführen der Köpfe 8 und 9 wird durch die Dimensionierung der Feder 18 bestimmt. Beim Auseinanderführen der Köpfe 8 und 9 wird die Geschwindigkeit, mit der Kopf 8 und 9 voneinander entfernt werden, nur durch die Feder 13 bestimmt. Kopfabreißen und Kopfanschlagen am Gehäuse 14 können demnach durch fehlerhaft dimensionierte Feder 13 und Betätigungsvorrichtung 6 auftreten. 40 ist der Antriebsmotor des Geräts 1 und 41 der Schrittmotor für die Positionierung der Köpfe 8 und 9.

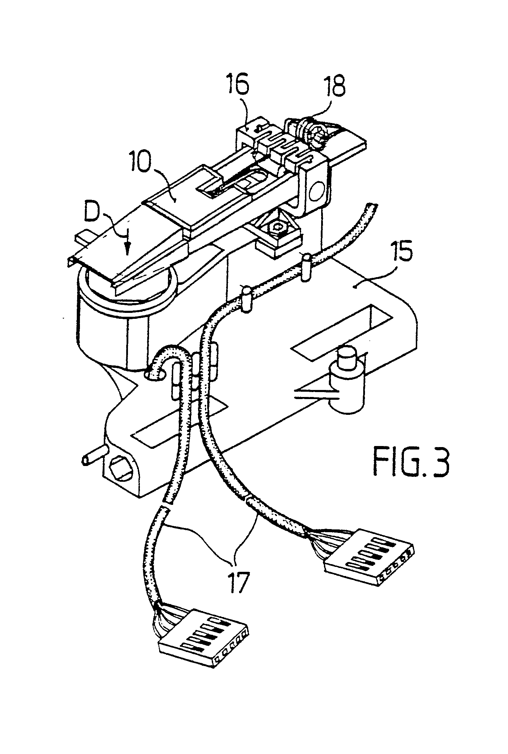

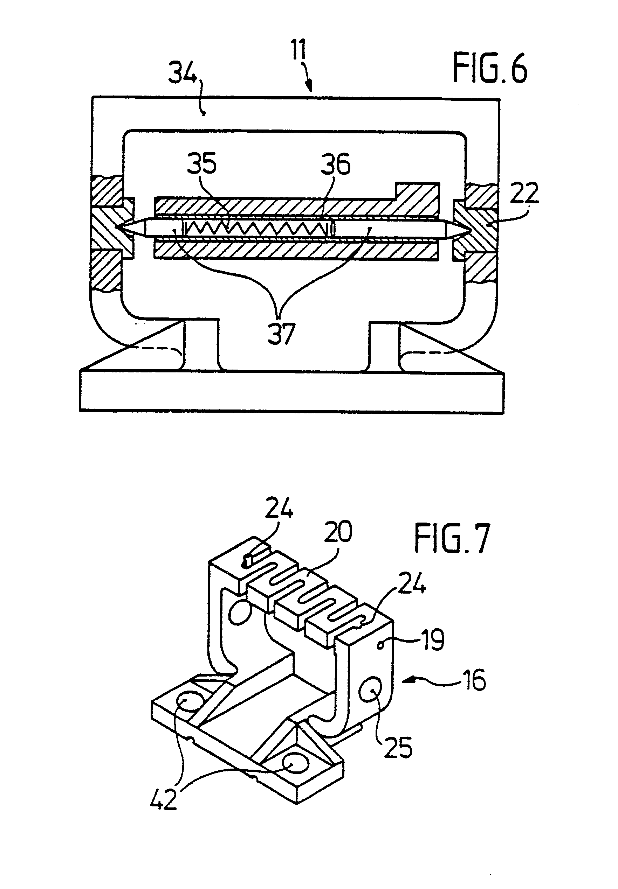

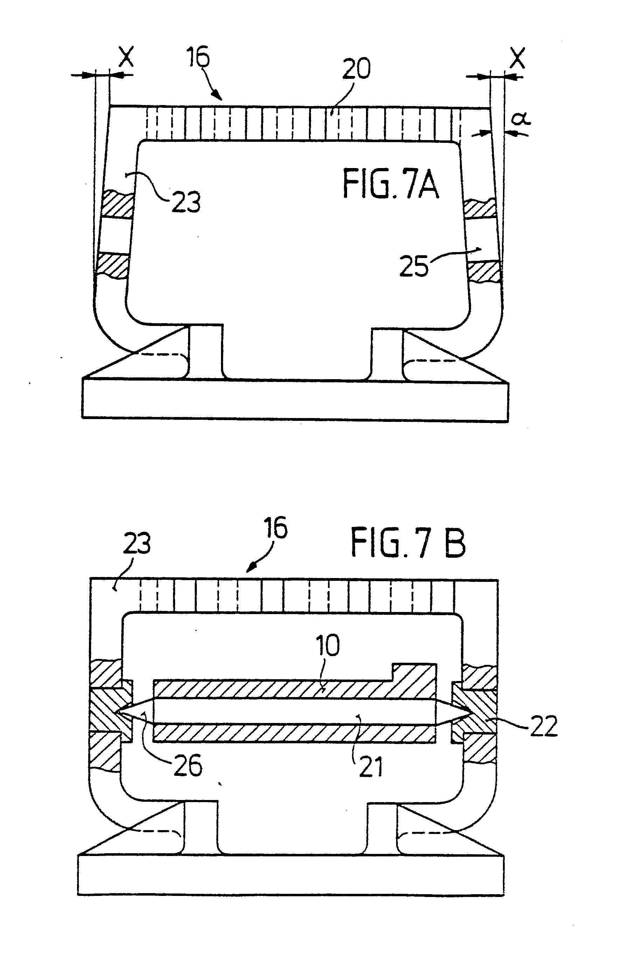

Figur 3 zeigt eine erfindungsgemäße Kopfanordnung in Perspektive. Darin sind 15 die Schlittenführung, 10 der Kopfarm mit hier nicht sichtbarem Kopf, 16 eine Rahmenfeder-Lagervorrichtung für den Kopfarm 10, und 17 Zuleitungen mit Steckern/Buchsen. Der Kopfarm 10 wird mittels der auf seinem Ende hinter dem Rahmen angeordneten Schenkelfeder 18 in Richtung des Pfeils D an die Platte 2 angedrückt bzw. zum Kopf 8 vorgespannt. Die Rahmenfeder-Lagervorrichtung 16 ist in Figuren 7, 7A und B noch einzeln dargestellt. Der Lagerbügel 19 ist auf der hier nicht dargestellten Schlittenvorrichtung mittels Schrauben etc. in Bohrungen 42 befestigbar. Der Lagerbügel 19 ist geschlossen ausgeführt und mit einer integriert ausgebildeten Axialdruckfeder 20, hier in Meanderform, dargestellt. Die Feder 20 übt hier wie auch in allen weiteren Ausführungen eine definierte Axialkraft zwischen Rahmenteilen und Gelenkachse 21 aus, damit der Kopfarm 10 äußerst spielfrei und reibungsarm gelagert ist, damit die erforderliche Kopfandruckkraft genau und hysteresefrei auch bei Temperaturänderungen eingestellt bleibt. Zum Einsetzen der Gelenkachse 21 in Lagerteile 22, die in Bohrungen 25 in den Schenkeln 23 des Lagerbügels 19, z. B. durch Einpressen, Einkleben usw. geeignet befestigt sind, kann man in Einkerbungen 24 der Feder 20 mittels einer Zange eingreifen, die Feder 20 zusammen mit den Schenkeln 23 im elastischen Bereich soweit dehnen, bis die Gelenkachse 21 in die Lagerteile 22 einrastet und dann spielfrei darin gehalten ist. Die Enden der Gelenkachse 21 sind erfindungsgemäß als Spitzen 26, hier konisch ausgebildet und die Lagerteile 22 enthalten entsprechende konische Vertiefungen. Es ist wie in Figur 5 gezeigt erfindungsgemäß auch möglich, abgerundete oder kugelförmige Enden 27 an einer Gelenkachse 28 vorzusehen, die in entsprechend muldenförmigen Lagerteilen 29 laufen.

Figur 7A zeigt, um welche Auslenkungen X beide Schenkel des Lagerbügels 19 und die Feder 20 dehnbar sind zum Einsetzen der Gelenkachse 21. Nach Einsetzen zeigt Figur 7B eine vertikale Ausrichtung der Schenkelanordnung. Der Winkel $\alpha$ kann beim unten genannten Werkstoff etwa 5° betragen, er kann auch größer oder kleiner sein, je nach dem jeweils verwendeten Werkstoff. Durch die Größe der Auslenkungen X ist die Vorspannung der Schenkel und damit die ständig auf die Gelenkachse ausgeübte Axialdruckkraft einstellbar.

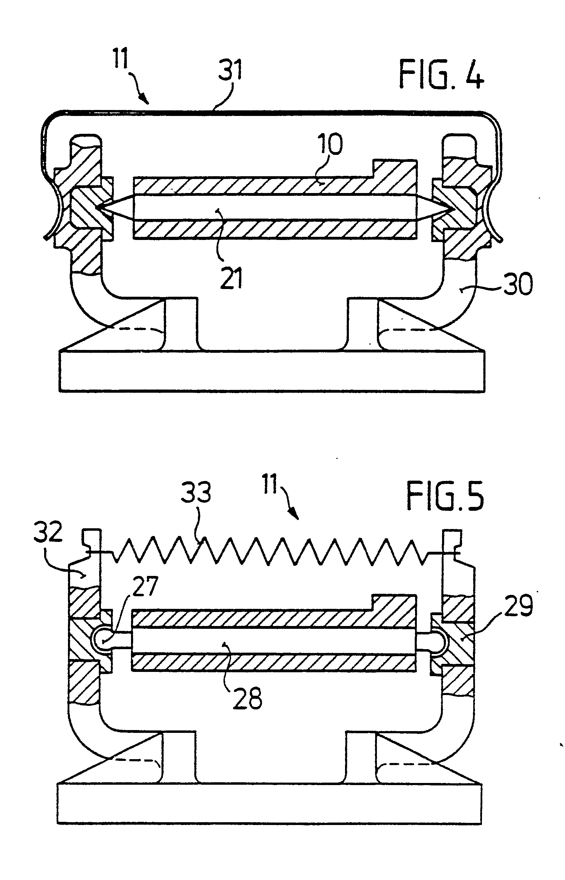

In Figuren 4 bis 6 sind weitere Lagervorrichtungen 11 dargestellt. Figur 4 zeigt einen U-Form-Rahmen 30 mit die Schenkel verbindender Druckfeder 31. Figur 5 zeigt ebenfalls einen U-Form-Rahmen 32 mit an den Schenkelenden eingehängter Zugfeder 33. In Figur 6 ist ein wiederum geschlossener Lagerbügel 34 dargestellt, der ohne jegliche Feder ausgebildet ist. Hier wird die notwendige Axialdruckkraft mittels einer Druckfeder 35, die innerhalb einer hohlen Gelenkachse 36 vorgesehen ist, aufgebracht. Die Gelenkachse kann hier auch aus der Feder 35 und den damit verbundenen Spitzen 37 bestehen und in einer Paßbuchse des Kopfarmes 10 im wesentlichen spielfrei gelagert sein.

Die beschriebenen Lagervorrichtungen 11, 16 haben den Vorteil, daß ohne Justage eine spielfreie, reibungsarme und zuverlässige Lagerung des Kopfarmes, nach dem Prinzip der Spitzen- oder Kugellagerung ermöglicht wird. Damit wird vorteilhaft erreicht, daß die zum Kopfandruck notwendige Federkraft mittels einer einfachen, nicht verstellbaren Andruckfeder, die als Schenkelfeder 18 aber auch als andersartige Feder z. B. als Blattfeder ausbildbar ist, direkt auf den Kopfarm 10 zu übertragen.

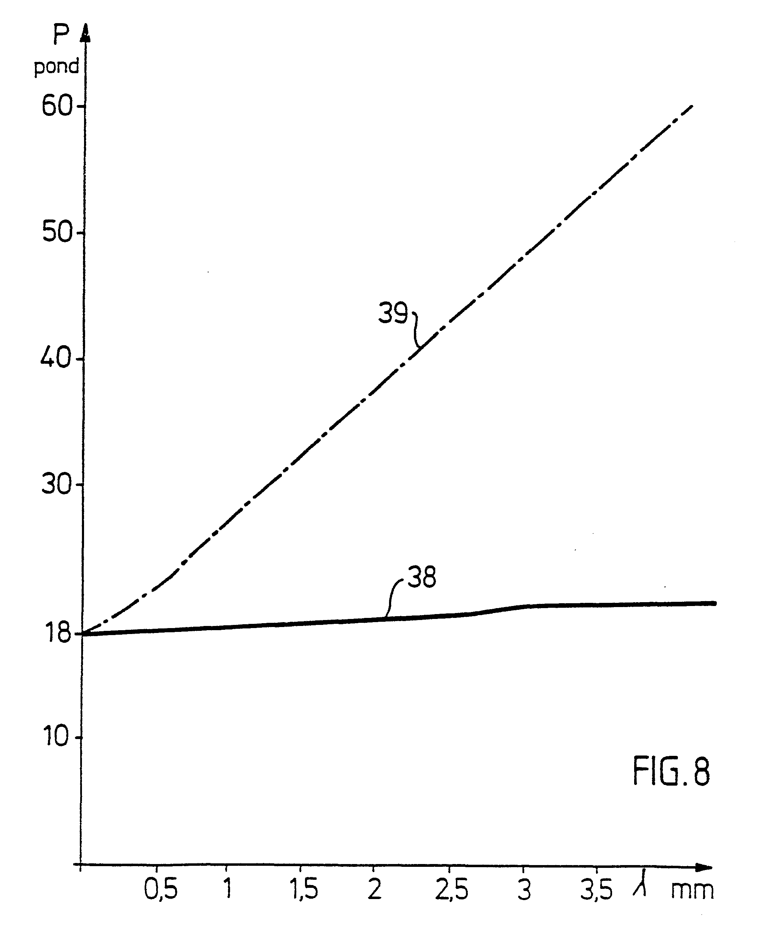

Im Diagramm in Figur 8 ist die bevorzugte Federkennlinie 38 des Kopfarms 10 ausgezogen dargestellt, die allein durch die Andruckfeder 18 bestimmt wird. Die Progression beträgt im Diagramm ca. + 20 %, also etwa 3 pond bei 18 pond Sollwert. Eine generelle Abweichung von der Horizontallinie von ca. ± 10 % bis höchstens ± 20 % wird als zulässig angesehen. Damit ergibt sich eine etwa horizontale Kennlinie, so daß der Kopfandruck im wesentlichen unabhängig von der jeweiligen Kopfarmauslenkung wird. Im Gegensatz dazu ist eine Kopfarm-Kennlinie 39 dargestellt, die nach dem Stand der Technik durch eine Blattfeder als Gelenk und durch eine senkrecht zur Blattfederebene auf den Kopfarm wirkende, einstellbare Druckfeder erzeugt wird. Der Kennlinienverlauf 39 ist stark progressiv, wodurch nachteiligerweise die Feder 13 des Kopflademechanismus 4 wesentlich größer dimensioniert werden muß. Ebenfalls wirken durch die stark progressive Blattfeder beim Kopfladevorgang große Beschleunigungskräfte auf die Köpfe 8 und 9, die zur Zerstörung der Köpfe und der Platte oder wenigstens zu deren frühzeitigem Verschleiß führen können.

Selbst bei Verwendung eines Blattfedergelenks und einer Schenkelfeder, wie in der GB-PS-2 000 354 beschrieben, treten aufgrund der Blattfeder stärker progressive Federcharakteristiken auf, die nicht ohne weiteres kompensierbar sind. Außerdem treten unerwünschte Kopfarmschwingungen auf, und die bekannte Lagervorrichtung ist aufgrund der verschiedenartigen, fest verbundenen Materialien (Kunststoff-Metall) äußerst temperaturempfindlich. Die Blattfeder und die Kopfarmmaterialien besitzen unterschiedliche Temperaturausdehnungskoeffizienten, deren Auswirkungen ebenfalls nicht ohne weiteres kompensierbar sind.

Gemäß oben beschriebenen erfindungsgemäßen Lagervorrichtungen werden folgende Vorteile erreicht :

Auftretendes Spiel infolge von Temperaturänderungen wird durch die Axialdruckfedern kompensiert, ohne daß die Lagerreibung wesentlich erhöht wird, Kopfarmschwingungen werden durch Auswählen des geeigneten Axialdrucks auf die Gelenkachse vermieden, Einstellarbeiten an der Lagervorrichtung oder der Andruckfeder werden vermieden, Montagearbeiten der Kopfvorrichtung werden vereinfacht, Anpassungen der Feder der Ladevorrichtungen an die Federkräfte des Kopfarms werden vermieden, Herstellungs-Arbeitsgänge der Lagervorrichtung werden vereinfacht und kostengünstiger.

Rahmenteile oder Lagerbügel der beschriebenen Ausführungsbeispiele der Figuren 1 bis 7 können aus jedem geeigneten Werkstoff bestehen, vorzugsweise aus Kunststoff mit geeigneten Federeigenschaften. Geeignet ist z. B. Polyacetal POM (Ultraform[R], eingetragenes Warenzeichen der BASF Aktiengesellschaft, Ludwigshafen). Die Verwendung von Kunststoff, evtl. mit Glasfaseranteil, ergibt eine Serienherstellbarkeit im Spritzguß usw. bei geringen Kosten. Selbstverständlich ist auch die Verwendung von Federmetallen möglich. Es können dabei z. B. die Schenkel des Lagerbügels durch Federmetallstreifen gebildet werden. Als Metallfedern in den Ausführungen der Figuren 4 bis 6 können handelsübliche Schrauben oder Blattfedern verwendet werden. Die Gelenkachse 21, 28, 37 kann aus Metall bestehen z. B. aus einer handelsüblichen Lagernadel. Die Enden 26, 27 können auch aus anderen reibungsgünstigeren und verschleißärmeren Materialien bestehen. Die Lagerteile 22, 29 können z. B. aus Edelsteinen oder Halbedelsteinen, deren Härte der Härte der Gelenkachsenenden angepaßt ist, bestehen. Derartige Edelsteinlager können auch in geeignete Metallbüchsen eingesetzt werden, damit eine sichere Befestigung am Rahmen erreicht wird. Die erfindungsgemäßen Kopfarm-Lagervorrichtungen wurden getestet und ergaben ausgezeichnete Lebensdauer- und Zuverlässigkeitsergebnisse.

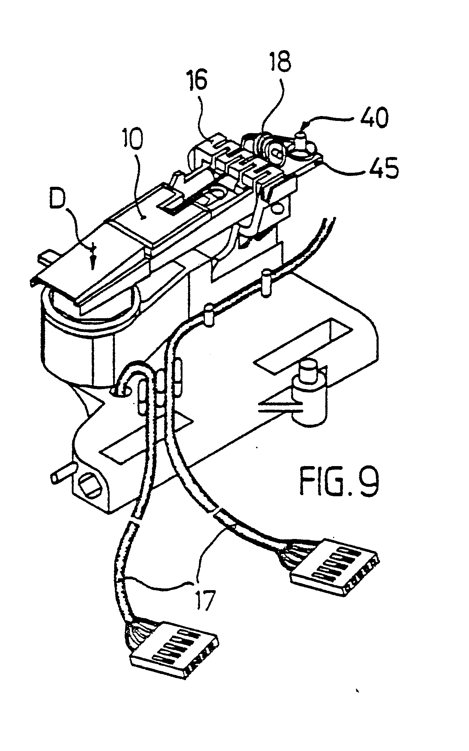

Figur 9 zeigt eine weitere erfindungsgemäße Kopfanordnung ähnlich Figur 3. Darin ist 45 der Rahmen, 10 der Kopfarm mit hier nicht sichtbarem Kopf, 16 eine Rahmen-Lagervorrichtung für den Kopfarm 10 und 17 sind Zuleitungen mit Steckern/Buchsen. Der Kopfarm 10 wird mittels der auf seinem Ende hinter dem Rahmen angeordneten Schenkelfeder 18 in Richtung des Pfeils D an die Platte 2 angedrückt bzw. zum Kopf 8 vorgespannt.

Die zum Kopfandruck notwendige Federkraft kann mittels einer einfachen Andruckfeder, die zweckmäßig als Schenkelfeder 18 ausbildbar ist, direkt auf den Kopfarm 10 übertragen werden. 40 ist eine Einstellvorrichtung für den hinteren Schenkel der Schenkelfeder 18. Die Einstellvorrichtung 40 ist genauer in den Figuren 9 bis 11 dargestellt. Die bevorzugte Federkennlinie des Kopfarms 10 wird allein durch die Andruckfeder 18 bestimmt. Die Progression beträgt ca. ± 10 %, also etwa 2 pond bei 18 pond Sollwert. Eine generelle Abweichung von der Horizontallinie von ca. ± 10 % wird als praktisch günstig angesehen. Damit ergibt sich eine etwa horizontale Kennlinie, so daß der Kopfandruck im wesentlichen unabhängig von der jeweiligen Kopfarmauslenkung wird.

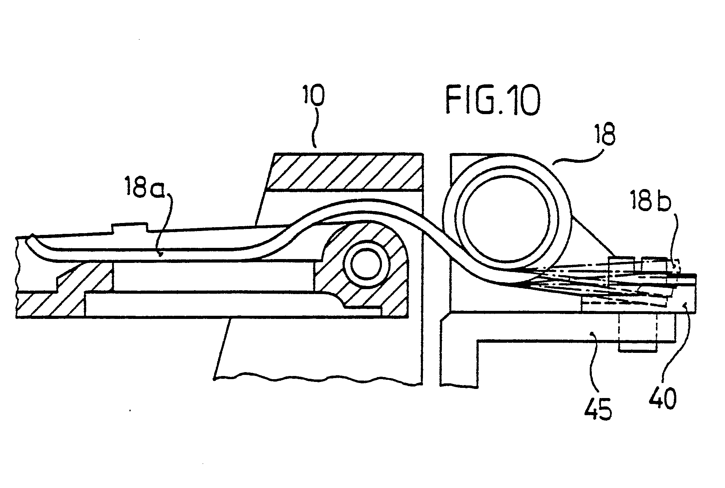

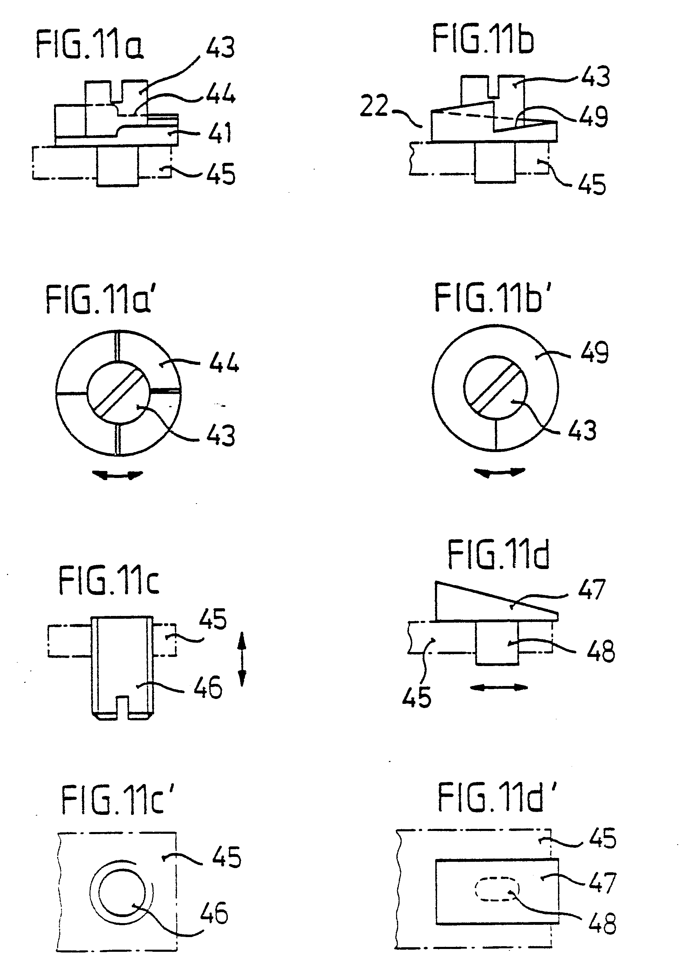

Die Einstellvorrichtung 40 hat die Aufgabe, die Höhelage des hinteren Schenkels 18b der Feder 18 verstellbar zu machen. Der vordere Schenkel 18a übt gemäß Figur 10 als Hebel einen Druck auf den Tragarm 10 aus und bestimmt somit die Kopfandruckkraft. Letztere ist überraschend einfach veränderbar über die verstellbare Höhenlagerung des hinteren Schenkels 18b. In Figur 10 kann die Einstellvorrichtung 40 eine der in Figuren 11a, 11a', 11b oder 11b' dargestellten, drehverstellbaren Scheiben 41 oder 42 sein. Die Scheibe 41 besitzt z. B. 4 Stufen 44 und einen Verstellteil 43, der als Schraube am Rahmen 45 ausgebildet sein kann. Die Scheibe 42 besitzt dagegen eine stufenlose, wendelförmige Bahn 49 mit ebenfalls einer Schlitzschraube als Verstellteil 43. In Figur 11c, 11c' besteht die Einstellvorrichtung aus einem Gewindestift 46, der im Rahmen in Doppelpfeilrichtung von unten verstellbar ist und damit die Höhenlage des hier nicht dargestellten Schenkels 18b verstellbar macht. Figur 11d, 11d' zeigt als weitere Variante einen Keilkörper 47 mit Lagerzapfen 48, der in einem nicht gezeigten Langloch des Rahmen 45 gemäß Doppelteil verschiebbar ist, wodurch über die Höhenlage des Schenkels 18b die durch den Schenkel 18a ausgeübte Andruckkraft einstellbar ist.

Je nach der vorgegebenen Kopfandruckkraft kann der jeweilige Verstellbereich der Feder 18 bemessen sein. Bei bekannten Laufwerken, bei denen die Andruckkraft im Bereich von 18 bis 22 pond liegt, ist eine Verstellung von ca. ± 10 % zweckmäßig. Eine Anpassung des Einstellbereichs an die praktischen Andruckwerte beliebiger Geräte ist jedoch ohne weiteres realisierbar. Wenn z. B. vier Stufen 44 verwendet werden, kann praktisch jeder Stufe eine Federkraftänderung von 1,5 pond zugeordnet werden. Es ist jedoch grundsätzlich jede Kraftänderungszuordnung, solange sie praktisch einfach realisierbar ist, benutzbar. Die Dimensionierung der Einzelstufen der Scheibe 41 kann auch so vorgenommen sein, daß jeder Stufenhöhe von 0,5 mm eine Federkraftänderung von ca. 1 pond zugeordnet ist. Ein Teil der Federkraftänderung wird meist zur Kompensation der Felderkrafttoleranz benötigt.

Eine Verdrehsicherung der Stufenscheibe 41 ist gegeben, wenn das Ende des Schenkels 18b an einer Stufenkante anliegt. Bei den übrigen Einstellvorrichtungen 42, 46 und 47 ist die Selbsthemmung der Lagermittel so zu wählen, daß eine Selbstverstellung nicht auftritt. Als mögliche Variante bei der Stufenscheibe 41 und dem Gewindestift 46 ist es möglich, als weitere Verstellung eine Längsverschiebung in Längsrichtung des Schenkels 18b vorzusehen, wodurch der wirksame Hebelarm und damit die Kraft verändert wird.

Alle beschriebenen Ausführungen von Einstellvorrichtungen können aus jedem geeigneten Werkstoff bestehen und vorzugsweise aus Kunststoff im Spritzguß hergestellt sein. Bei der Verwendung desselben Kunststoffmaterials für die Einstellvorrichtung wie für den Rahmen 45, werden Temperatureinflüsse durch unterschiedliche Wärmeausdehnungen vermieden.

**Patentansprüche**

1. Kopfarm-Lagervorrichtung für mindestens einen Abtastkopf (9) in Aufzeichnungs- und/oder Wiedergabegeräten (1) für Aufzeichnungsträger, insbesondere flexible Aufzeichnungsträger (2), wobei der Kopfarm (10) mit dem Abtastkopf (9) auf einer zwischen den U-Schenkeln der Lagervorrichtung (11) vorgesehenen Gelenkachse gelagert ist und über eine Andruckfeder (18) an den Aufzeichnungsträger (2) oder gegen eine weitere Abtastkopfvorrichtung federnd andrückbar ist, dadurch gekennzeichnet, daß die Gelenkachse (21, 28, 36) mittels Spitzen- oder Kugelformenden (27) an den U-Schenkeln (19, 30, 32, 34) reibungsarm gelagert ist und zur spielfreien Lagerung eine auf die U-Schenkel wirkende und auf die Enden der Gelenkachse eine Axialdruckkraft von zwischen 5,1 und 20,4 Newton ausübende Feder (20, 31, 33, 35) vorgesehen ist, und daß die Andruckfeder (18) eine im wesentlichen horizontal verlaufende Federkennlinie (38) aufweist.

2. Vorrichtung nach Anspruch 1, dadurch gekennzeichnet, daß die U-Schenkel (23) mit einer Zugfeder (20) einstückig ausgebildet sind.

3. Vorrichtung nach Anspruch 2, dadurch gekennzeichnet, daß die einstückig ausgebildete Zugfeder (20) eine Mäanderform aufweist.

4. Vorrichtung nach Anspruch 1, dadurch gekennzeichnet, daß die Federkennlinie (38) um ca. ± 10 %, höchstens jedoch ca. ± 20 %, von einem horizontalen Verlauf abweicht.

5. Vorrichtung nach Anspruch 1 oder den Ansprüchen 2 oder 3, dadurch gekennzeichnet, daß die zwischen Gelenkachse (21, 28, 36) und Rahmen (19, 30, 32, 34) wirkende Axialdruckkraft etwa 7,8 Newton beträgt.

6. Vorrichtung nach einem der Ansprüche 1 bis 4, dadurch gekennzeichnet, daß die Andruckfeder (18) eine Schenkelfeder ist, deren einer Schenkel (18b) über eine Einstellvorrichtung (40) zum Verändern der Federkraft verstellbar gelagert ist.

7. Vorrichtung nach Anspruch 6, dadurch gekennzeichnet, daß die Einstellvorrichtung (40) eine drehbar gelagerte Stufenscheibe (41) mit mehreren, insbesondere vier Stufen (44) ist.

8. Vorrichtung nach Anspruch 6, dadurch gekennzeichnet, daß die Einstellvorrichtung (40) eine drehbar gelagerte Scheibe (42) mit stufenloser Wendelbahn (49) ist.

9. Vorrichtung nach Anspruch 6, dadurch gekennzeichnet, daß die Einstellvorrichtung (40) ein höheneinastellbarer Gewindestift (46) ist.

10. Vorrichtung nach Anspruch 6, dadurch gekenneichnet, daß die Einstellvorrichtung (40) ein längsverschieblicher Keilkörper (47) ist.

11. Vorrichtung nach Ansprüchen 6 bis 10, dadurch gekennzeichnet, daß die Einstellvorrichtung (40) aus Kunststoffmaterial besteht.

**Claims**

1. A head arm mounting device for at least one scanning head (9) in recording and/or playback apparatus (1) for recording media, especially flexible recording media (2), the head arm (10) bearing the scanning head (9) being mounted on a pivot shaft arranged between the legs of a U-shaped mount (11) and being capable of being resiliently urged against the recording medium (2) or another scanning head by means of a loading spring (18), wherein the pivot shaft (21, 28, 36) is mounted on the arms (19, 30, 32, 34) in an essentially frictionless manner via pointed or spherical ends (27), and, to ensure play-free mounting, a spring (20, 31, 33, 35) is provided which acts on the legs and exerts an axial force of from 5.1 to 20.4 N on the ends of the pivot shaft, and wherein the loading spring has an essentially horizontal characteristic curve (38).

2. A device as claimed in claim 1, wherein a tension spring (20) is integrally formed with the legs (23).

3. A device as claimed in claim 2, wherein the integrally formed tension spring (20) is of meander shape.

4. A device as claimed in claim 1, wherein the spring-characteristic curve (38) deviates by about ± 10 %, but by no more than ± 20 %, from a horizontal line.

5. A device as claimed in claim 1, 2 or 3, wherein the axial force exerted on the pivot shaft (21, 28, 36) by the arms (19, 30, 32, 34) is about 7.8 N.

6. A device as claimed in any of claims 1 to 4, wherein the loading spring (18) is a two-armed torsion spring, one arm (18b) of which can be displaced by adjustment means (40) for varying the spring force.

7. A device as claimed in claim 6, wherein the adjustment means (40) comprises a rotatably mounted stepped disk (41) having several, especially four, steps (44).

8. A device as claimed in claim 6, wherein the adjustment means (40) comprises a rotatably mounted disk (42) with a continually rising inclined surface (49).

9. A device as claimed in claim 6, wherein the adjustment means (40) is a vertically displaceable headless screw (46).

10. A device as claimed in claim 6, wherein the adjustment means (40) is a longitudinally displaceable wedge-shaped member (47).

11. A device as claimed in claims 6 to 10, wherein the adjustment means (40) is made of plastics material.

**Revendications**

1. Dispositif support de bras de tête pour au moins une tête de lecture (9) dans des appareils (1) d'enregistrement et/ou de reproduction pour support d'enregistrement, en particulier support d'enregistrement flexible (2), le bras de tête (10) et la tête de lecture (9) étant montés sur un axe d'articulation prévu entre les branches d'un U du dispositif support (1) et étant rappelables élastiquement, grâce à un ressort de rappel (18), contre le support d'enregistrement (2) ou un autre dispostif de tête de lecture, caractérisé par le fait que l'axe d'articulation (21, 28, 36) est supporté, sans frottement notable, sur les branches de l'U (19, 30, 32, 34), par ses extrémités (27) en forme de pointes ou de sphères et, pour un support sans jeu, il est prévu un ressort (20, 31, 33, 35) agissant sur les branches de l'U et exerçant sur les extrémités de l'axe d'articulation une force de poussée axiale comprise entre 5,1 et 20,4 newton, et le ressort de rappel (18) présente une ligne caractéristique sensiblement horizontale.

2. Dispositif selon la revendication 1, caractérisé par le fait que les branches de l'U (23) sont réalisées d'une seule pièce par un ressort de traction (20).

3. Dispositif selon la revendication 2, caractérisé par le fait que le ressort de traction (20) réalisé d'une pièce possède une forme en méandre.

4. Dispositif selon la revendication 1, caractérisé par le fait que la ligne caractéristique de ressort (38) ne s'écarte de l'horizontale que d'environ ± 10 %, au plus toutefois d'environ ± 20 %.

5. Dispositif selon la revendication 1 ou les revendications 2 ou 3, caractérisé par le fait que la force de poussée axiale agissant entre l'axe d'articulation (21, 28, 36) et le bâti (19, 30, 32, 34) est d'environ 7,8 newton.

6. Dispositif selon l'une des revendications 1 à 4, caractérisé par le fait que le ressort de rappel (18) est un ressort à branches dont l'une des branches (18b) est réglable, pour faire varier la force du ressort, par l'intermédiaire d'un moyen de réglage (40).

7. Dispositif selon la revendication 6, caractérisé par le fait que le moyen de réglage (40) est un disque étagé (41) tournant, muni de plusieurs, en particulier quatre, étages (44).

8. Dispositif selon la revendication 6, caractérisé par le fait que le moyen de réglage (40) est un disque tournant (42) à piste hélicoïdale continue (49).

9. Dispositif selon la revendication 6, caractérisé par le fait que le moyen de réglage (40) est une broche filetée (46) réglable en hauteur.

10. Dispositif selon la revendication 6, caractérisé par le fait que le moyen de réglage (40) est un corps en forme de coin (47) déplaçable longitudinalement.

11. Dispositif selon les revendications 6 à 10, caractérisé par le fait que le moyen de réglage (40) est en matière plastique.

FIG.2

FIG.1

FIG. 3

FIG. 4

FIG. 5

FIG.6

FIG.7

FIG.7A

FIG.7 B

FIG.8

FIG. 9

FIG.10

FIG.11a

43
44
41
45

FIG.11b

22
43
49
45

FIG.11a'

44
43

FIG.11b'

49
43

FIG.11c

45
46

FIG.11d

47
48
45

FIG.11c'

45
46

FIG.11d'

45
47
48